# EUROPEAN PATENT APPLICATION

(11) **EP 3 324 075 A1**
(43) Date of publication of application: **23.05.2018**
(21) Application number: 17201596.8
(22) Date of filing: 14.11.2017
(51) Int. Cl.: F16F 15/023, F16F 9/06, B62D 21/15, F16F 9/46

(54) **VEHICLE REINFORCING MEMBER AND VEHICLE**

(30) Priority: 14.11.2016 JP 2016221907
(71) Applicant: Yamaha Hatsudoki Kabushiki Kaisha, Iwata-shi Shizuoka 438-8501 (JP)
(72) Inventor: YAMAZAKI, Yutaka, Iwata-shi, Shizuoka 438-8501 (JP); KAMO, Toshiaki, Iwata-shi, Shizuoka 438-8501 (JP); HARADA, Toyoji, Iwata-shi, Shizuoka 4388501 (JP)
(74) Representative: Grünecker Patent- und Rechtsanwälte PartG mbB

(57) **Abstract**

Pistons (20, 30) are provided to be movable in an axial direction in a cylinder (10). An inside of the cylinder (10) is sectioned into a gas chamber (C1) and a main liquid chamber (C2) by the piston (20), and the main liquid chamber (C2) is sectioned into a sub-liquid chamber (C21) and a sub-liquid chamber (C22) by the piston (30). Gas is sealed in the gas chamber (C1), and liquid is sealed in the sub-liquid chambers (C21, C22). A piston rod (40) is coupled to the piston (30). The cylinder (10) and the pistonrod (40) are respectively coupled to two positions of a vehicle body. In the piston rod (40), a communication path that connects the sub-liquid chamber (C21) to the sub-liquid chamber (C22) is formed. A moving amount of the liquid in the communication path is adjusted by an adjustment mechanism (50), whereby a moving load of the piston (30) is adjusted.

## Description

The present invention relates to a vehicle reinforcing member and a vehicle including the vehicle reinforcing member.

When the vehicle travels, subtle deformation and vibration occur in a vehicle body. In order to inhibit such deformation and vibration of the vehicle body, it has been suggested that a damper is provided at a main part of the vehicle body. A reinforcing member described in JP 2002-211437 A is provided to couple left and right wall portions of a vehicle body to each other. This reinforcing member functions as a hydraulic damper and inhibits deformation and vibration of the vehicle body by a viscous damping force.

However, damping forces required to inhibit deformation and vibration differ depending on sizes and shapes of vehicle bodies. Further, the required damping forces differ depending on use environments of the vehicles such as a road surface condition. The reinforcing member of the above-mentioned document cannot adjust a damping force. Therefore, it is necessary that different reinforcing members are prepared according to the vehicle bodies and the use environments. Then, a reinforcing member having high flexibility is required.

It is an object of the present invention is to provide a vehicle reinforcing member capable of adjusting a damping force and having high flexibility, and a vehicle including the vehicle reinforcing member. According the present invention said object is solved by a vehicle reinforcing member having the features of the independent claim 1. Preferred embodiments are laid down in the dependent claims.
(1) A vehicle reinforcing member according to one aspect of the present invention provided between two positions on a vehicle body of a vehicle includes a cylinder, a first piston that is configured to section an inside of the cylinder into a gas chamber and a main liquid chamber and is provided to be movable in an axial direction in the cylinder, a second piston that is configured to section the main liquid chamber into a first sub-liquid chamber and a second sub-liquid chamber and is provided in the main liquid chamber to be movable in the axial direction in the cylinder, a piston rod that is coupled to the second piston and is configured to extend to an outside of the cylinder through the second sub-liquid chamber, and an adjustment mechanism that is configured to adjust a moving load of the second piston in the main liquid chamber, wherein gas is sealed in the gas chamber, and liquid is sealed in the first and second sub-liquid chambers, the piston rod is coupled to one of the two positions on the vehicle body, the cylinder is coupled to another one of the two positions on the vehicle body, at least one of the second piston and the piston rod has a communication path that is configured to connect the first sub-liquid chamber to the second sub-liquid chamber, and the adjustment mechanism is configured to adjust the moving load by adjusting a moving amount of liquid in the communication path.
   In this vehicle reinforcing member, the inside of the cylinder is sectioned into the gas chamber and the main liquid chamber by the first piston, and the main liquid chamber is sectioned into the first sub-liquid chamber and the second sub-liquid chamber by the second piston. The gas is sealed in the gas chamber, and the liquid is sealed in the first and second sub-liquid chambers. The first sub-liquid chamber and the second sub-liquid chamber communicate with each other through the communication path provided at at least one of the second piston and the piston rod. The piston rod is coupled to the second piston, and the piston rod is coupled to one of the two positions on the vehicle body. Further, the cylinder is coupled to the other position of the two positions on the vehicle body.
   The force in the axial direction is exerted on the second piston in the cylinder by displacement of the two positions on the vehicle body or vibration. Thus, the second piston is moved in the axial direction in the cylinder, and liquid flows between the first sub-liquid chamber and the second sub-liquid chamber through the communication path. In this case, a damping force is generated by a flow of the liquid, and displacement of the two positions on the vehicle body and vibration are inhibited. Further, the first piston is moved in the axial direction while receiving the pressure of the gas in the gas chamber. Thus, a pressure difference between the first sub-liquid chamber and the second sub-liquid chamber is reduced, and an occurrence of cavitation is inhibited.
   The moving amount of the liquid in the communication path is adjusted by the adjustment mechanism, so that the moving load of the second piston is adjusted. Thus, a damping force of the vehicle reinforcing member can be adjusted to be suitable for a size and a use environment of the vehicle body. Therefore, flexibility of the vehicle reinforcing member is enhanced.
(2) The adjustment mechanism may adjust a moving amount of the liquid in the communication path by changing a cross sectional area through which the liquid can pass in the communication path. In this case, the damping force of the vehicle reinforcing member can be adjusted with a simple configuration.
(3) The adjustment mechanism may include a moving member having an insertion portion that is insertable into the communication path, and a driving mechanism that is configured to move the moving member, and the driving mechanism may change the cross sectional area through which the liquid can pass in the communication path by changing a relative positional relationship between the communication path and the insertion portion by movement of the moving member.
   In this case, when the moving member is moved by the driving mechanism, a relative positional relationship between the communication path and the insertion portion is changed. Thus, a cross sectional area through which the liquid can pass in the communication path is changed. Thus, a moving amount of the liquid in the communication path is adjusted. Therefore, the damping force of the vehicle reinforcing member can be adjusted with a simple configuration.
(4) A through hole extending in the axial direction may be formed in the second piston, the piston rod may include a rod member inserted into the through hole of the second piston, and a cap nut, in the rod member, a movement path extending in the axial direction may be formed, and a communication opening that is configured to connect the movement path to the second sub-liquid chamber may be formed, one end of the rod member may project into the first sub-liquid chamber, the cap nut may be attached to the one end of the rod member, a communication hole that is configured to connect the first sub-liquid chamber to the movement path of the rod member may be formed in the cap nut, the moving member may include an adjust rod inserted into the movement path of the rod member to be movable, a tip end of the adjust rod can be positioned inside of the cap nut as the insertion portion, the communication path may be formed of the communication hole of the cap nut, a clearance between an inner surface of the rod member and an outer surface of the adjust rod and a communication opening of the rod member, and the driving mechanism may change a positional relationship between the communication hole of the cap nut and the insertion portion by moving the adjust rod relative to the rod member.
   In this case, due to the movement of the second piston, the liquid flows between the first sub-liquid chamber and the second sub-liquid chamber through the communication hole of the cap nut, the clearance between the inner surface of the rod member and the outer surface of the adjust rod and the communication opening of the rod member. When the adjust rod is moved by the driving mechanism relative to the rod member, a positional relationship between the insertion portion of the adjust rod and the communication hole of the cap nut is changed. Thus, the cross sectional area through which the liquid can pass in the communication path is changed, and the moving amount of the liquid in the communication path is adjusted.
   In this manner, the communication hole is formed in the cap nut, and the adjust rod inserted into the movement path of the rod member is moved. Thus, the moving amount of the liquid in the communication path is adjusted. Therefore, a damping force of the vehicle reinforcing member can be adjusted with a simple and compact configuration.
(5) The insertion portion may have a tapered shape. In this case, a cross sectional area through which the liquid can pass is gradually changed due to the movement of the adjust rod. Thus, a moving amount of the liquid in the communication path can be finely adjusted.
(6) The movement path of the rod member and the adjust rod may respectively have circular cross sections, and the driving mechanism may include a first screw thread provided on an outer surface of the adjust rod, a second screw thread provided on an inner surface of the rod member to engage with the first screw thread, and a rotating mechanism that is configured to rotate the adjust rod and is configured to move the adjust rod in the movement path of the rod member.
   In this case, when the adjust rod is rotated by the rotating mechanism, the adjust rod is moved in the axial direction with respect to the rod member. Thus, the cross sectional area through which the liquid can pass can be changed with a simple configuration.
(7) The rod member may be a cylindrical member extending in the axial direction, the adjust rod may have a projection end that is configured to project from another end of the piston rod, and the rotating mechanism may be attached to the projection end of the adjust rod. In this case, the rotating mechanism can be easily attached to the adjust rod.
(8) The vehicle reinforcing member may further include a biasing member that is configured to bias the second piston in one direction of the axial direction. In this case, the second piston is stably held at an appropriate position by the biasing member.
(9) The vehicle reinforcing member may further include a first coupling portion that is configured to couple the piston rod to one of the two positions on the vehicle body, wherein the first coupling portion may include an attachment portion attached to a portion of an outer surface of the piston rod outside of the cylinder, and a first extending portion that is offset from an extending line of an axial center of the piston rod and is configured to extend in the axial direction.
   In this case, the piston rod can be easily coupled to the vehicle body by the first coupling portion. Further, because the first coupling portion is offset from the extending line of the axial center of the piston rod, a space is formed on the extending line of the piston rod. The configuration of the adjustment mechanism can be simplified by utilization of the space.
(10) The vehicle reinforcing member may further include a second coupling portion that is configured to couple the cylinder to another position of the two positions on the vehicle body, wherein the second coupling portion may include a second extending portion that is configured to extend in the axial direction to be positioned on an extending line of the piston rod. In this case, the cylinder can be easily coupled to the vehicle body by the second coupling portion.
(11) A vehicle according to another aspect of the present invention includes a vehicle body, and the above-mentioned vehicle reinforcing member attached to a position between the two positions on the vehicle body.

In this vehicle, the above-mentioned vehicle reinforcing member is used, so that deformation and vibration of the vehicle body can be inhibited. Further, because a damping force of the vehicle reinforcing member can be adjusted, travel stability can be enhanced in various vehicles and various use environments.

Other features, elements, characteristics, and advantages of the present invention will become more apparent from the following description of preferred embodiments of the present invention with reference to the attached drawings.
Fig. 1 is a schematic diagram for explaining a vehicle including a vehicle reinforcing member according to an embodiment;
Fig. 2 is a diagram showing the appearance of a reinforcing member;
Fig. 3 is a cross sectional view of the reinforcing member;
Fig. 4 is an enlarged cross sectional view showing the inside of a cylinder;
Fig. 5 is an enlarged cross sectional view of portions of a rod member and an adjust rod located outside of the cylinder;
Fig. 6 is a diagram for explaining movement of a piston in the cylinder;
Fig. 7 is a diagram for explaining the movement of the piston in the cylinder;
Fig. 8 is a diagram for explaining details of an adjustment mechanism;
Fig. 9 is a diagram for explaining a specific example of a rotating mechanism;
Fig. 10 is a diagram for explaining a specific example of the rotating mechanism;
Figs. 11A and 11B are diagrams for explaining a distance between a seal member and a screw thread; and
Figs. 12A and 12B are diagrams for explaining the distance between the seal member and the screw thread.

A vehicle reinforcing member and a vehicle according to embodiments will be described below with reference to drawings. In the following embodiment, the vehicle reinforcing member is provided in a four-wheeled automobile that is equivalent to the vehicle.

### [1] Vehicle

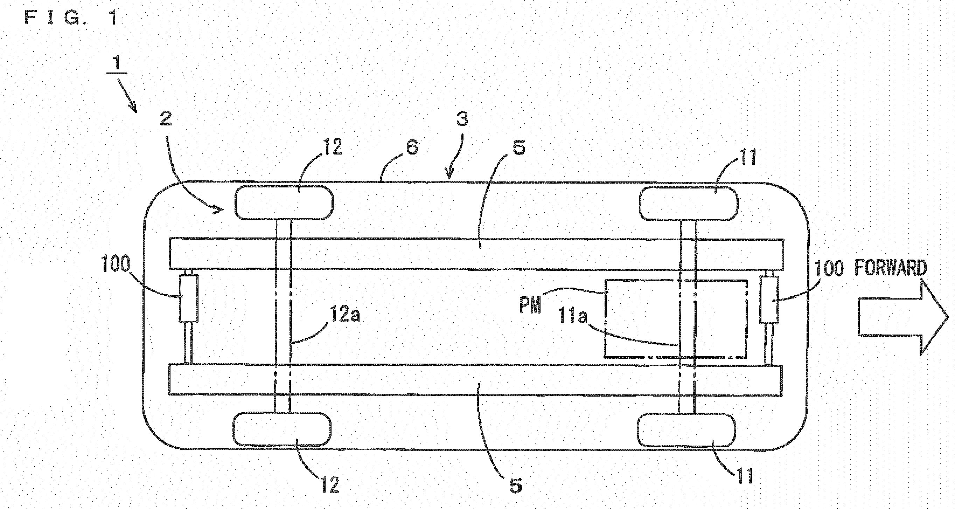

Fig. 1 is a schematic diagram for explaining the vehicle including the vehicle reinforcing member according to an embodiment. As shown in Fig. 1, the vehicle 1 includes a motor PM, a chassis 2 and a vehicle body 3. The motor PM is an engine, for example, and generates power for allowing the vehicle 1 to travel. The chassis 2 mainly includes parts to which the power generated by the motor PM is transmitted. Specifically, the chassis 2 includes a pair of left and right front wheels 11, a pair of left and right rear wheels 12, axles 11 a, 12a and a pair of left and right suspensions (not shown). The pair of front wheels 11 is provided at one end and the other end of the axle 11a, and the pair of rear wheels 12 is provided at one end and the other end of the axle 12a.

The vehicle body 3 is supported by the chassis 2. The vehicle body 3 mainly includes parts to which the power generated by the motor PM is not transmitted. Specifically, the vehicle body 3 includes a pair of left and right main frames 5 and an outer frame 6. The pair of respective main frames 5 extends in a vehicle front-and-rear direction. A left front wheel 11 and a left rear wheel 12 are respectively coupled to a left main frame 5 via a suspension (not shown), and a right front wheel 11 and a right rear wheel 12 are respectively coupled to a right main frame 5 via a suspension (not shown). The outer frame 6 is integrally provided with the left and right main frames 5. The outer frame 6 includes a bonnet, a roof, a bumper and the like and forms an outer shape of the vehicle.

The reinforcing member 100 is provided between predetermined two positions on the vehicle body 3. In the present example, a pair of reinforcing members 100 is provided to couple the pair of main frames 5 to each other. One reinforcing member 100 is provided to couple front ends of the pair of main frames 5, and the other reinforcing member 100 is provided to couple rear ends of the pair of main frames 5 to each other.

### [2] Configuration of Reinforcing Members

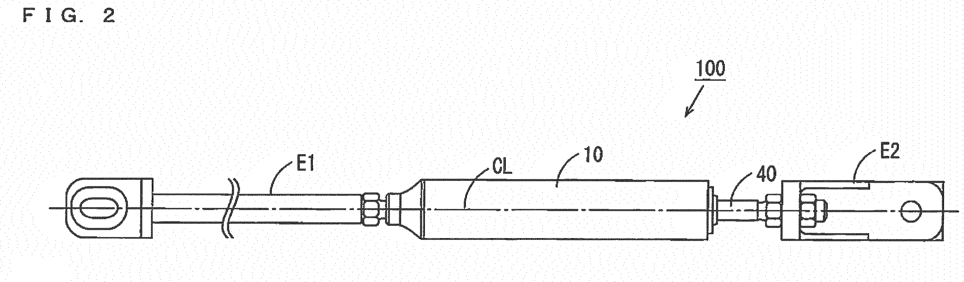

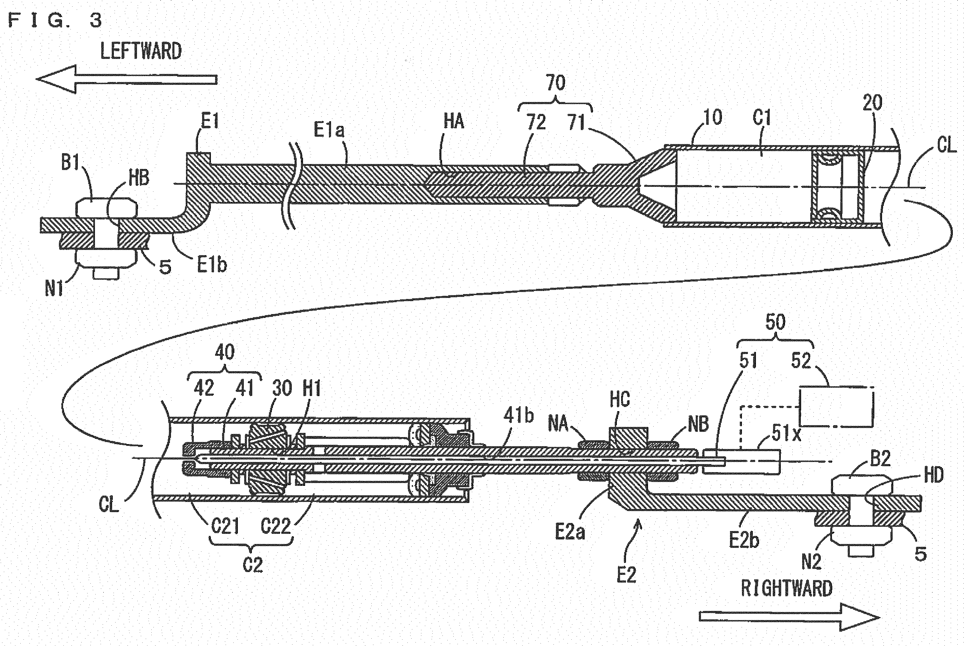

Fig. 2 is a diagram showing the appearance of the reinforcing member 100. Fig. 3 is a cross sectional view of the reinforcing member 100. As shown in Fig. 2, the reinforcing member 100 has a cylinder 10. The cylinder 10 is coupled to one main frame 5 (Fig. 3) via a coupling member E1. A piston rod 40 is provided to project from the cylinder 10. The piston rod 40 is coupled to the other main frame 5 (Fig. 3) via a coupling member E2.

Hereinafter, a straight line coinciding with an axial center of the cylinder 10 is referred to as an axial center line CL, and a direction parallel to the axial center line CL is referred to as an axial direction. Further, a direction directed from one end towards the other end of the cylinder 10 is conveniently referred to as rightward, and a direction directed from the other end towards the one end of the cylinder 10 is conveniently referred to as leftward.

As shown in Fig. 3, the reinforcing member 100 includes pistons 20, 30 and an adjustment mechanism 50. The pistons 20, 30 are respectively provided to be movable in the axial direction in the cylinder 10. The inside of the cylinder 10 is sectioned into a gas chamber C1 and a main liquid chamber C2 by the piston 20. The gas chamber C1 is located a position further leftward than the piston 20, and the main liquid chamber C2 is located at a position further rightward than the piston 20. The piston 30 is arranged at a position further rightward than the piston 20. The main liquid chamber C2 is further sectioned into a sub-liquid chamber C21 and a sub-liquid chamber C22 by the piston 30. The sub-liquid chamber 21 is located at a position further leftward than the piston 30, and the sub-liquid chamber C22 is located at a position further rightward than the piston 30. A through hole H1 is formed in the piston 30 to extend along the axial center line CL.

Gas is sealed in the gas chamber C1, and liquid is sealed in the sub-liquid chambers C21, C22. The gas sealed in the gas chamber C1 is nitrogen, for example. Further, in the present example, oil is sealed in the sub-liquid chambers C21, C22 as the liquid.

A closing member 70 is attached to the left end of the cylinder 10. The closing member 70 includes a closing portion 71 and a male screw 72. The closing member 71 closes the left end of the cylinder 10. The male screw 72 extends leftward along the axial center line CL from the closing portion 71.

The coupling member E1 includes an extending portion E1a and a fixing portion E1 b. The extending portion E1 a extends in a bar shape in the axial direction. The fixing portion E1b has an L-shaped cross section and provided at the left end of the extending portion E1a. A screw hole HA having a certain depth is formed to extend in the axial direction from the right end of the extending portion E1a. The male screw 72 of the closing member 70 is screwed into the screw hole HA, so that the coupling member E1 is fixed to the closing member 70. A bolt hole HB is formed in the fixing portion E1b. A bolt B1 is inserted into the bolt hole HB, and a nut N1 is attached to a tip end of the bolt B1. Thus, the coupling member E1 is fixed to the one main frame 5.

The piston rod 40 includes a cylindrical rod member 41 extending in the axial direction and a cap nut 42. The rod member 41 is inserted into the through hole H1 of the piston 30 and extends in the axial direction to the outside of the cylinder 10 through the sub-liquid chamber C22. An axial center of the rod member 41 coincides with the axial center line CL. A movement path 41 b extending in the axial direction is formed in the rod member 41. The left end of the rod member 41 projects from one surface of the piston 30 to the sub-liquid chamber C21. The cap nut 42 is attached to the left end of the rod member 41.

The adjustment mechanism 50 includes a bar-shape adjust rod 51 and a rotating mechanism 52. The adjust rod 51 is inserted into the movement path 41 b of the rod member 41 to be movable. An axial center of the adjust rod 51 coincides with the axial center line CL.

The right end of the adjust rod 51 projects from the right end of the piston rod 40. The rotating mechanism 52 is attached to the right end of the adjust rod 51 via an attachment portion 51x. The rotating mechanism 52 moves the adjust rod 51 in the axial direction. Details of the rotating mechanism 52 will be described below.

The coupling member E2 includes an attachment portion E2a and an extending portion E2b. An insertion hole HC is formed in the attachment portion E2a. The rod member 41 is inserted into the insertion hole HC. Nuts NA, NB are attached to the rod member 41 to hold the coupling member E2 therebetween. Thus, the coupling member E2 is fixed to an outer peripheral surface of the rod member 41. The extending portion E2b is offset from the axial center line CL and extends in the axial direction. A bolt hole HD is formed in the extending portion E2b. A bolt B2 is inserted into the bolt hole HD, and a nut N2 is attached to a tip end of the bolt B2. Thus, the coupling member E2 is fixed to the other main frame 5.

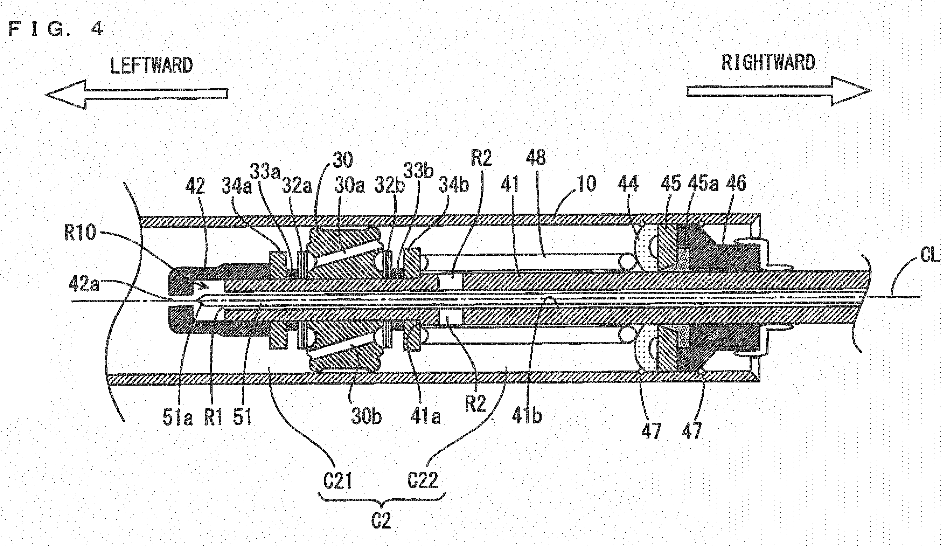

Fig. 4 is an enlarged cross sectional view showing the inside of the cylinder 10. As shown in Fig. 4, a plurality of communication holes 30a and a plurality of communication holes 30b for connecting the sub-liquid chamber C21 to the sub-liquid chamber C22 are provided in the piston 30. In Fig. 4, only one communication hole 30a and one communication hole 30b are shown. The communication hole 30a extends from a left surface towards a right surface of the piston 30 to gradually approach an inner peripheral surface of the cylinder 10. The communication hole 30b extends from the right surface towards the left surface of the piston 30 to gradually approach the inner peripheral surface of the cylinder 10. The left surface of the piston 30 is a surface, facing the sub-liquid chamber C21, of the piston 30, and the right surface of the piston 30 is a surface, facing the sub-liquid chamber C22, of the piston 30.

An annular valve plate 32a is arranged on an outer peripheral surface of the rod member 41 to abut against the left surface of the piston 30, and an annular valve plate 32b is arranged on the outer peripheral surface of the rod member 41 to abut against the right surface of the piston 30. The valve plate 32a is provided to close a left end opening of the communication hole 30a. The valve plate 32b is provided to close a right end opening of the communication hole 30b. A left end opening of the communication hole 30b is not closed by the valve plate 32a, and a right end opening of the communication hole 30a is not closed by the valve plate 32b. The valve plates 32a, 32b function as a resistance to a flow of oil.

An annular spacing member 33a and an annular washer 34a are arranged at the left of the valve plate 32a. The spacing member 33a abuts against the valve plate 32a, and the washer 34a abuts against the spacing member 33a. An annular spacing member 33b and an annular washer 34b are arranged at the right of the valve plate 32b. The spacing member 33b abuts against the valve plate 32b, and the washer 34b abuts against the spacing member 33b. Outer diameters of the spacing members 33a, 33b are respectively smaller than outer diameters of the valve plates 32a, 32b, and are respectively smaller than outer diameters of the washers 34a, 34b.

A step portion 41a is formed at a portion of the outer peripheral surface of the rod member 41 located in the sub-liquid chamber C22. The washer 34b abuts against the step portion 41 a. Thus, the rightward movement of the washer 34b is restricted. When the cap nut 42 is fastened, the piston 30, the valve plates 32a, 32b, the spacing members 33a, 33b and the washers 34a, 34b are fixed to the rod member 41.

In the vicinity of the right end of the cylinder 10, an annular pressing member 44, annular seal members 45, 45a and a substantially cylindrical closing member 46 are arranged between the inner peripheral surface of the cylinder 10 and the outer peripheral surface of the rod member 41. The seal members 45, 45a are arranged to overlap with each other, and the pressing member 44 and the closing member 46 are respectively arranged at the left and right of the seal members 45, 45a to hold the seal members 45, 45a therebetween in the axial direction. A pair of positioning rings 47 is attached to the inner peripheral surface of the cylinder 10. The pressing member 44 and the closing member 46 are positioned with respect to the cylinder 10 by the positioning rings 47 while pressing the seal members 45, 45a. The seal members 45, 45a are elastic members made of rubber or the like, and adhere to the inner peripheral surface of the cylinder 10 and the outer peripheral surface of the rod member 41 by being pressed by the pressing member 44 and the closing member 46. Thus, the main liquid chamber C2 is fluid-tightly sealed. The pressing member 44, the seal member 45 and the closing member 46 are fixed to the cylinder 10. The rod member 41 is movable in the axial direction with respect to the pressing member 44, the seal members 45, 45a and the closing member 46.

A biasing member 48 extending in the axial direction is arranged between the washer 34b and the pressing member 44 to surround the outer peripheral surface of the piston rod 40 (the rod member 41). The biasing member 48 biases the piston 30 in the axial direction. Thus, the piston 30 is stably held at an appropriate position in the main liquid chamber C2.

A tapered portion 51 a having a diameter that gradually decreases leftward is provided at the left end of the adjust rod 51. The tapered portion 51 a projects from the left end of the rod member 41 to the sub-liquid chamber C21. An outer diameter of the adjust rod 51 is smaller than an inner diameter of the rod member 41. Therefore, a communication path R1 is formed between the inner peripheral surface of the movement path 41b and the outer peripheral surface of the adjust rod 51. A plurality of communication openings R2 for connecting the communication path R1 to the sub-liquid chamber C22 are formed in the rod member 41.

A communication hole 42a extending along the axial center line CL is formed in the cap nut 42. An inner diameter of the communication hole 42a is smaller than the outer diameter of the adjust rod 51. In this manner, a communication path R10 including the communication hole 42a, the communication path R1 and the communication opening R2 is formed in the piston rod 40. The sub-liquid chamber C21 and the sub-liquid chamber C22 communicate with each other through the communication path R10.

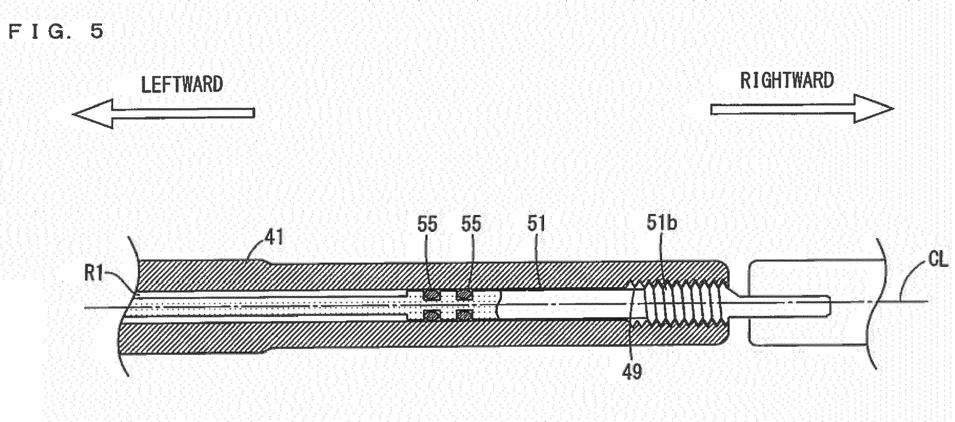

Fig. 5 is an enlarged cross sectional view of portions of the rod member 41 and the adjust rod 51 located outside of the cylinder 10. As shown in Fig. 5, outside of the cylinder 10, a pair of annular seal members 55 is attached to the outer peripheral surface of the adjust rod 51. Each seal member 55 adheres to the outer peripheral surface of the adjust rod 51 and the inner peripheral surface of the rod member 41. Thus, the communication path R1 is fluid-tightly sealed.

A screw thread 49 is formed on an inner peripheral surface of the right end of the rod member 41. Further, a screw thread 51b corresponding to the screw thread 49 is formed on the outer peripheral surface of the adjust rod 51. The screw thread 51b of the adjust rod 51 engages with the screw thread 49 of the rod member 41. A range in which the screw thread 49 is formed in the axial direction is larger than a range in which the screw thread 51b is formed in the axial direction by a certain length. A driving mechanism is constituted by the screw threads 49, 51 b and the rotating mechanism 52 of Fig. 3. The adjust rod 51 is rotated by the rotating mechanism 52 about the axial center line CL with respect to the piston rod 40, whereby the adjust rod 51 is moved in the axial direction with respect to the piston rod 40. A direction in which the adjust rod 51 is moved depends on a direction in which the adjust rod 51 is rotated. Further, a range in which the adjust rod 51 can be moved depends on the range in which the screw thread 49 is formed. In the present example, the length of the range in which the adjust rod 51 can be moved is about 1 mm.

### [3] Function

The function of the reinforcing member 100 will be described. When the force in the axial direction is applied to the reinforcing member 100 from the pair of main frames 5 of Fig. 1, the piston 30 is moved in the axial direction in the cylinder 10. Thus, the reinforcing member 100 extends and contracts.

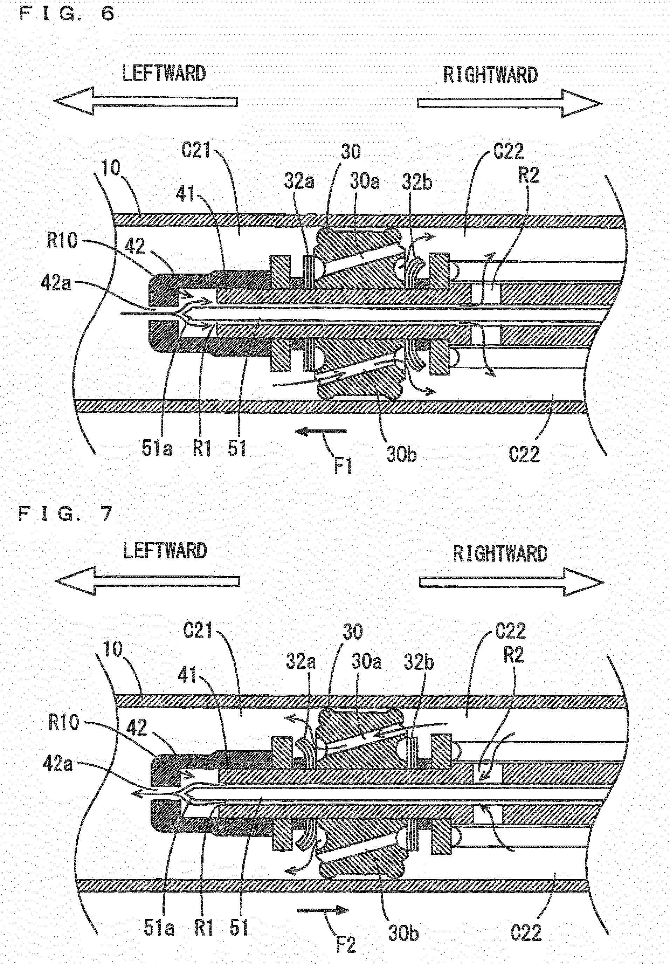

Figs. 6 and 7 are diagrams for explaining the movement of the piston 30 in the cylinder 10. Fig. 6 shows the movement of the piston 30 when the reinforcing member 100 contracts. Fig. 7 shows the movement of the piston 30 when the reinforcing member 100 extends.

In the example of Fig. 6, a leftward force F1 is applied to the piston 30. In this case, the piston 30 is moved leftward with respect to the cylinder 10, and oil flows from the sub-liquid chamber C21 to the sub-liquid chamber C22.

Specifically, an oil pressure in the sub-liquid chamber C21 is higher than an oil pressure in the sub-liquid chamber C22, so that the oil flows from the sub-liquid chamber C21 to the sub-liquid chamber C22 through the communication path R10 (the communication hole 42a, the communication path R1 and the communication opening R2) of the piston rod 40. Further, an outer periphery of the valve plate 32b is bent rightward, and the right end opening of the communication hole 30b is opened. Thus, the oil flows from the sub-liquid chamber C21 to the sub-liquid chamber C22 through the communication hole 30b. The valve plate 32a is pressed against the left surface of the piston 30 by the oil pressure in the sub-liquid chamber C21. Therefore, the valve plate 32a is kept closing the left end opening of the communication hole 30a.

In the example of Fig. 7, when a rightward force F2 is applied to the piston 30, the piston 30 is moved rightward with respect to the cylinder 10, and the oil flows from the sub-liquid chamber C22 to the sub-liquid chamber C21.

Specifically, the oil pressure in the sub-liquid chamber C22 is higher than the oil pressure in the sub-liquid chamber C21. Therefore, the oil flows from the sub-liquid chamber C21 to the sub-liquid chamber C22 through the communication path R10 of the piston rod 40. Further, the valve plate 32a is bent leftward. Therefore, the left end opening of the communication hole 30a is opened. Thus, the oil flows from the sub-liquid chamber C22 to the sub-liquid chamber C21 through the communication hole 30a. The valve plate 32b is pressed against the right surface of the piston 30 by the oil pressure in the sub-liquid chamber C22. Therefore, the valve plate 32b is kept closing the right end opening of the communication hole 30b.

The resistance is exerted on a flow of oil caused by the movement of the piston 30. Thus, kinetic energy is converted into thermal energy. As a result, the resistance to the flow of oil is exerted as a damping force, and deformation and vibration of the main frames 5 are inhibited.

The piston 20 of Fig. 3 is moved in the axial direction in the cylinder 10 while receiving the pressure of the gas in the gas chamber C1. Thus, a pressure difference between the sub-liquid chamber C21 and the sub-liquid chamber C22 is reduced. Therefore, an occurrence of cavitation in the cylinder 10 is inhibited.

### [4] Movement of Adjust Rod 51

In the present embodiment, the adjust rod 51 is moved in the axial direction in the movement path 41 b of the rod member 41, so that a moving amount of oil in the communication path R10 is adjusted. Here, a moving amount of oil means a flow amount of oil per unit time.

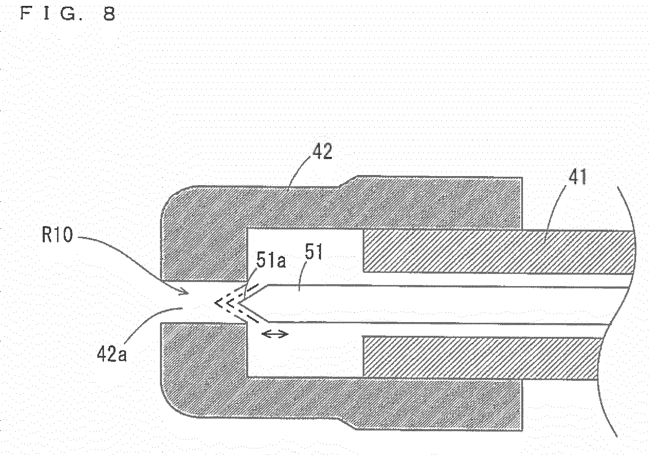

Fig. 8 is a diagram for explaining the movement of the adjust rod 51. As shown in Fig. 8, when the adjust rod 51 is moved in the axial direction, a positional relationship between the communication path R10 and the tapered portion 51a of the adjust rod 51 is changed. Thus, a cross sectional area (hereinafter referred to as an oil passing area) through which the oil can pass in the communication path R10 is changed. Thus, a moving amount of oil in the communication path R10 is changed.

Specifically, when a position of the tip end of the tapered portion 51a in the communication hole 42a of the cap nut 42 is changed, the oil passing area in the communication hole 42 is changed. The oil passing area in the communication hole 42a gradually decreases as the adjust rod 51 is moved leftward with respect to the rod member 41. As the oil passing area decreases, the resistance to the flow of oil increases, and the damping force increases.

In this manner, the communication hole 42a is formed in the cap nut 42, and the adjust rod 51 inserted into the movement path 41b of the rod member 41 is moved, whereby the damping force of the reinforcing member 100 can be adjusted with a simple and compact configuration. Further, because the tapered portion 51 a having a diameter that gradually decreases is provided at the left end of the adjust rod 51, a cross sectional area through which the oil can pass is gradually changed with the movement of the adjust rod 51. Thus, the moving amount of oil in the communication path R10 can be finely adjusted.

### [5] Rotating Mechanism

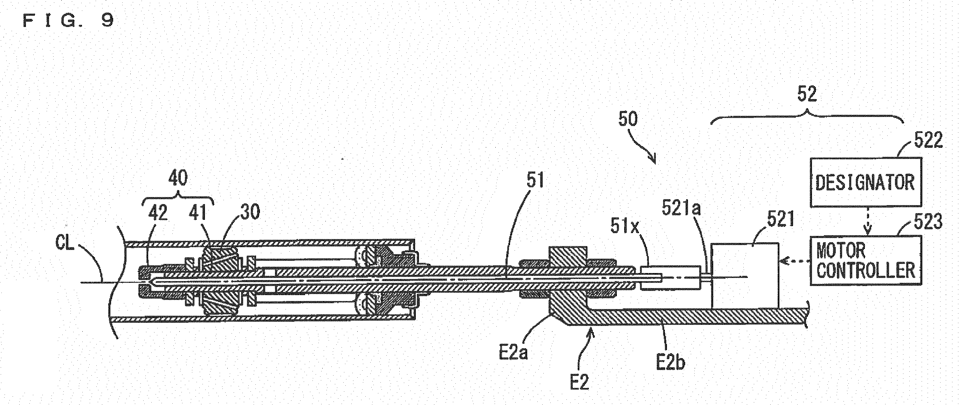

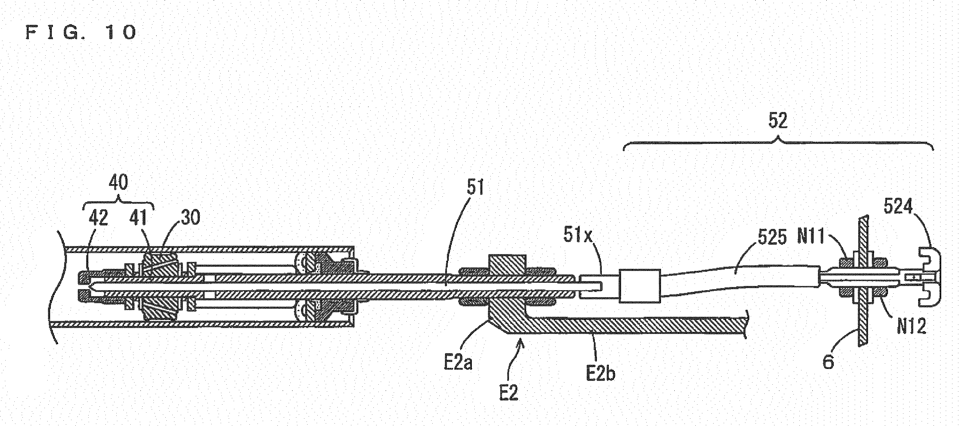

Figs. 9 and 10 are diagrams for explaining a specific example of the rotating mechanism 52. In the example of Fig. 9, the rotating mechanism 52 includes a motor 521, a designator 522 and a motor controller 523. The motor 521 is fixed to the extending portion E2b of the coupling member E2 on the axial center line CL. A rotation shaft 521a of the motor 521 is coupled to the right end of the adjust rod 51 via an attachment portion 51x. The designator 522 is operated by a driver, a maintenance operator or the like for designation of a moving direction and a moving amount of the adjust rod 51. The motor controller 523 controls the rotating direction and the rotating amount of the motor 521 based on the operation of the designator 522. Thus, the adjust rod 51 can be arbitrarily moved rightward and leftward. As a result, the damping force of the reinforcing member 100 can be arbitrarily adjusted.

In the present example, because the extending portion E2b of the coupling member E2 is offset from the axial center of the rod member 41, a space is formed on an extending line of the rod member 41. Because it is possible to attach the motor 521 to the adjust rod 51 by utilizing the space, the configuration of the adjustment mechanism 50 can be simplified.

The motor 521 may be provided at another position of the vehicle body 3 instead of being provided on the coupling member E2. In this case, the rotation shaft 521a of the motor 521 is connected to the adjust rod 51 via a flexible connection member, for example, and the rotation of the rotation shaft 521 a is transmitted to the adjust rod 51 via the connection member. Further, the motor controller 523 may control the motor 521 based on a signal from another electronic appliance such as a sensor instead of controlling the motor 521 based on the operation of the designator 522.

In the example of Fig. 10, the rotating mechanism 52 includes an adjustment knob 524. The adjustment knob 524 is attached to a predetermined position of the outer frame 6 by nuts N11, N12 to be exposed to the outside of the outer frame 6. The adjustment knob 524 is connected to the adjust rod 51 via the flexible connection member 525. The driver, the maintenance operator or the like can hold and rotate the adjustment knob 524. The rotation of the adjustment knob 524 is transmitted to the adjust rod 51 via the connection member 525. Thus, the adjust rod 51 can be arbitrarily moved rightward and leftward. As a result, the driver, the maintenance operator or the like can easily and manually adjust the damping force of the reinforcing member 100.

### [6] Prevention of Damage of Seal Member

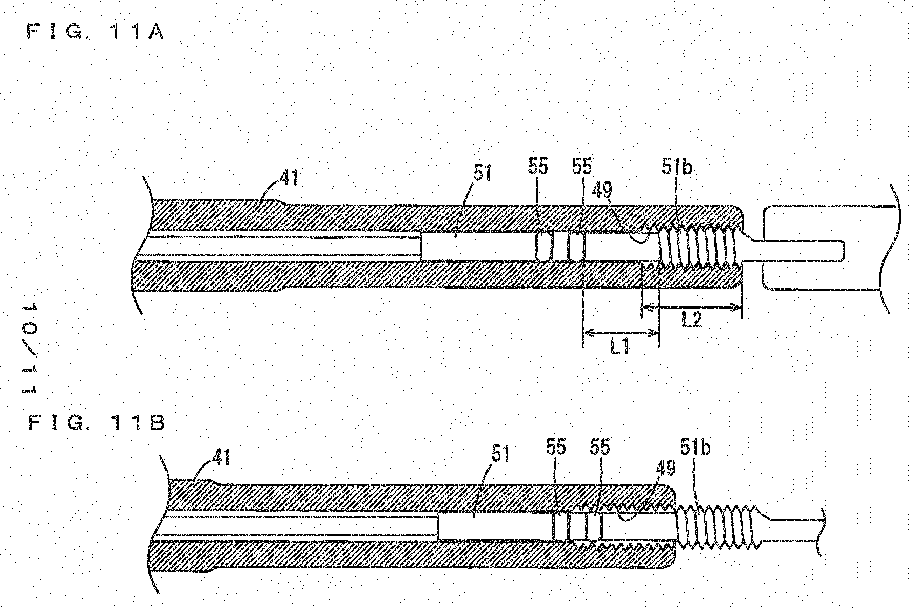

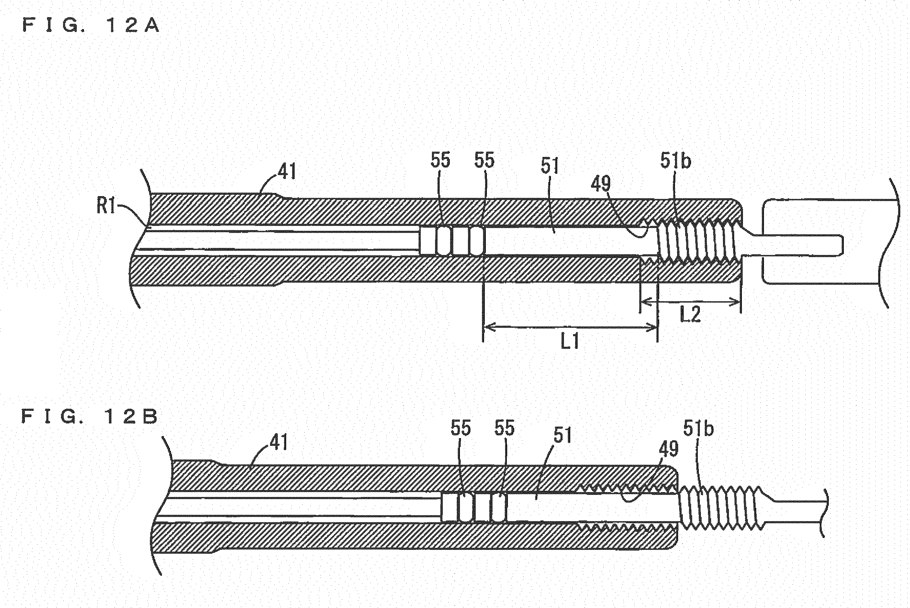

A distance between the seal member 55 and the screw thread 51b provided on the outer peripheral surface of the adjust rod 51 in the axial direction is preferably set larger than a length of the screw thread 49 provided on the movement path 41b of the rod member 41 in the axial direction. Figs. 11A, 11B, 12A and 12B are diagrams for explaining the distance between the seal member 55 and the screw thread 51 b.

In the example of Fig. 11A, the distance L1 between the seal member 55 and the screw thread 51b in the axial direction is smaller than the length L2 of the screw thread 49 of the rod member 41 in the axial direction.

In assembly of the reinforcing member 100, the adjust rod 51 is inserted into the movement path 41 b from the right end of the rod member 41. When the left end of the screw thread 51 b of the adjust rod 51 reaches the right end of the screw thread 49 of the rod member 41, the adjust rod 51 is rotated with respect to the rod member 41, and the screw thread 51b engages with the screw thread 49.

As shown in Fig. 11B, in the case where the distance L1 is smaller than the length L2, when the left end of the screw thread 51 b reaches the right end of the screw thread 49, at least right seal member 55 is in contact with the screw thread 49. When the adjust rod 51 is rotated with respect to the rod member 41 in this state, the seal member 55 may be damaged by the screw thread 49.

In contrast, in the example of Fig. 12A, the distance L1 between the seal member 55 and the screw thread 51 b in the axial direction is larger than the length L2 of the screw thread 49 of the rod member 41 in the axial direction. In this case, as shown in Fig. 12B, when the left end of the screw thread 51b reaches the right end of the screw thread 49, the seal member 55 is located at a position further leftward than the left end of the screw thread 49. Therefore, the adjust rod 51 is not rotated with respect to the rod member 41 with the seal member 55 in contact with the screw thread 49. Therefore, the seal member 55 is prevented from being damaged by the screw thread 49.

### [7] Effects of Embodiment

In the reinforcing member 100 according to the present embodiment, the force in the axial direction is exerted on the piston 30 in the cylinder 10 by the deformation or vibration of the main frames 5. Thus, the piston 30 is moved in the axial direction in the cylinder 10, and the oil flows between the sub-liquid chamber C21 and the sub-liquid chamber C22 through the communication path R10. In this case, a damping force is generated by the flow of oil, and deformation and vibration of the main frames 5 are inhibited. Further, the piston 20 is moved in the axial direction while receiving the pressure of the gas in the gas chamber C1. Thus, a pressure difference between the sub-liquid chamber C21 and the sub-liquid chamber C22 is reduced, and an occurrence of cavitation is inhibited.

Further, a moving amount of oil in the communication path R10 is adjusted by the adjustment mechanism 50, so that a moving load of the piston 30 is adjusted. Thus, the damping force of the reinforcing member 100 can be adjusted to be suitable for a size and a use environment of the vehicle body 3. Therefore, flexibility of the reinforcing member 100 is enhanced.

Further, in the present embodiment, a cross sectional area through which the oil can pass in the communication path R10 is changed, so that a moving amount of oil in the communication path R10 is adjusted. Thus, a damping force of the reinforcing member 100 can be adjusted with a simple configuration.

Further, in the present embodiment, the adjust rod 51 is rotated with the screw thread 49 provided on the inner surface of the rod member 41 engaging with the screw thread 51 b provided on the outer surface of the adjust rod 51. Therefore, the adjust rod 51 is moved in the axial direction in the movement path 41b of the rod member 41. Thus, a cross sectional area through which the oil can pass can be changed with a simple configuration. Further, the right end of the adjust rod 51 is provided to project from the movement path 41b of the rod member 41, so that the rotating mechanism 52 can be easily attached to the adjust rod 51.

### [8] Other Embodiments

In the above-mentioned embodiment, the tapered portion 51 a is provided at the tip end of the adjust rod 51. However, if the oil passing area in the communication path R10 can be changed, the adjust rod 51 may have another shape. For example, a diameter of the tip end of the adjust rod 51 may be set to decrease in steps.

In the above-mentioned embodiment, the communication hole 42a is formed in the cap nut 42, and the oil passing area in the communication hole 42a is changed, whereby a moving amount of oil in the communication path R10 is adjusted. However, the moving amount of oil in the communication path R10 may be adjusted by another configuration. For example, an opening through which the tip end of the adjust rod 51 is inserted may be provided at the movement path 41b of the rod member 41, and the moving amount of oil in the communication path R10 may be adjusted by the change of the oil passing area in the opening. Further, a moving amount of oil in the communication holes 30a, 30b of the piston 30 may be adjusted.

While the adjust rod 51 is moved in the axial direction by being rotated by the rotating mechanism 52 in the above-mentioned embodiment, the adjust rod 51 may be moved by another configuration. For example, a sliding mechanism for allowing the adjust rod 51 to slide in the axial direction without rotating the adjust rod 51 may be provided.

While the cylinder 10 and the piston rod 40 are respectively coupled to the vehicle body 3 via the coupling members E1, E2 in the above-mentioned embodiment, at least one of the cylinder 10 and the piston rod 40 may be directly coupled to the vehicle body 3 without another member.

While the reinforcing member 100 is attached to the pair of main frames 5 in the above-mentioned embodiment, the reinforcing member 100 may be attached to another portion of the vehicle body 3. For example, the reinforcing member 100 may be provided between two positions of the bumper of the outer frame 6 of the vehicle body 3.

While the reinforcing member 100 is provided in the four-wheeled automobile in the above-mentioned embodiment, the reinforcing member 100 may be provided in another vehicle such as a motor three-wheeled vehicle, a motorcycle, an ATV (All Terrain Vehicle) or the like.

### [9] Correspondences between Constituent Elements in Claims and Parts in Preferred Embodiments

In the following paragraphs, non-limiting examples of correspondences between various elements recited in the claims below and those described above with respect to various preferred embodiments are explained.

In the above-mentioned embodiment, the vehicle 1 is an example of a vehicle, the vehicle body 3 is an example of a vehicle body, the reinforcing member 100 is an example of a vehicle reinforcing member, the cylinder 10 is an example of a cylinder, the piston 20 is an example of a first piston, the gas chamber C1 is an example of a gas chamber, the main liquid chamber C2 is an example of a main liquid chamber, the piston 30 is an example of a second piston, the sub-liquid chamber C21 is an example of a first sub-liquid chamber, the sub-liquid chamber C22 is an example of a second sub-liquid chamber, the piston rod 40 is an example of a piston rod, the adjustment mechanism 50 is an example of an adjustment mechanism and the communication path R10 is an example of a communication path.

Further, the adjust rod 51 is an example of a moving member and an adjust rod, the tapered portion 51a is an example of an insertion portion, the screw threads 49, 51b and the rotating mechanism 52 are examples of a driving mechanism, the through hole H1 is an example of a through hole, the rod member 41 is an example of a rod member, the cap nut 42 is an example of a cap nut, the movement path 41b is an example of a movement path, the communication opening R2 is an example of a communication opening, the communication hole 42a is an example of a communication hole, the screw thread 51b is an example of a first screw thread, the screw thread 49 is an example of a second screw thread and the rotating mechanism 52 is an example of a rotating mechanism.

Further, the right end of the adjust rod 51 is an example of a projection end, the biasing member 48 is an example of a biasing member, the coupling member E2 is an example of a first coupling portion, the attachment portion E2a is an example of an attachment portion, the extending portion E2b is an example of a first extending portion, the coupling member E1 is an example of a second coupling portion, and the extending portion E1 a is an example of a second extending portion.

As each of constituent elements recited in the claims, various other elements having configurations or functions described in the claims can be also used.

### INDUSTRIAL APPLICABILITY

The present invention can be effectively utilized for various types of vehicles.

## Claims

1. A vehicle reinforcing member (100) provided between two positions on a vehicle body (3) of a vehicle (1), comprising:
a cylinder (10);
a first piston (20) that is configured to section an inside of the cylinder (10) into a gas chamber (C1) and a main liquid chamber (C2) and is provided to be movable in an axial direction in the cylinder (10);
a second piston (30) that is configured to section the main liquid chamber (C2) into a first sub-liquid chamber (C21) and a second sub-liquid chamber (C22) and is provided in the main liquid chamber (C2) to be movable in the axial direction in the cylinder (10);
a piston rod (40) that is coupled to the second piston (30) and is configured to extend to an outside of the cylinder (10) through the second sub-liquid chamber (C22); and
an adjustment mechanism (50) that is configured to adjust a moving load of the second piston (30) in the main liquid chamber (C2), wherein
gas is sealed in the gas chamber (C1), and liquid is sealed in the first and second sub-liquid chambers (C21, C22),
the piston rod (40) is coupled to one of the two positions on the vehicle body (3),
the cylinder (10) is coupled to another one of the two positions on the vehicle body (3),
at least one of the second piston (30) and the piston rod (40) has a communication path (R10) that is configured to connect the first sub-liquid chamber (C21) to the second sub-liquid chamber (C22), and
the adjustment mechanism (50) is configured to adjust the moving load by adjusting a moving amount of liquid in the communication path (R10).

2. A vehicle reinforcing member (100) according to claim 1, wherein
the adjustment mechanism (50) is configured to adjust the moving amount of the liquid in the communication path (R10) by changing a cross sectional area through which the liquid can pass in the communication path (R10).

3. A vehicle reinforcing member (100) according to claim 2, wherein
the adjustment mechanism (50) includes
a moving member having an insertion portion that is insertable into the communication path (R10), and
a driving mechanism that is configured to move the moving member, and
the driving mechanism is configured to change the cross sectional area through which the liquid can pass in the communication path (R10) by changing a relative positional relationship between the communication path (R10) and the insertion portion by movement of the moving member.

4. A vehicle reinforcing member (100) according to claim 3, wherein
a through hole (H1) extending in the axial direction is formed in the second piston (30),
the piston rod (40) includes
a rod member (41) inserted into the through hole (H1) of the second piston (30), and
a cap nut (42),
in the rod member (41), a movement path (41b) extending in the axial direction is formed, and a communication opening (R2) that is configured to connect the movement path (41b) to the second sub-liquid chamber (C22) is formed,
one end of the rod member (41) is configured to project into the first sub-liquid chamber (C21),
the cap nut (42) is attached to the one end of the rod member (41),
a communication hole (42a) that is configured to connect the first sub-liquid chamber (C21) to the movement path (41b) of the rod member (41) is formed in the cap nut (42),
the moving member includes an adjust rod (51) inserted into the movement path (41b) of the rod member (41) to be movable,
a tip end of the adjust rod (51) can be positioned inside of the cap nut (42) as the insertion portion,
the communication path (R10) is formed of the communication hole (42a) of the cap nut (42), a clearance between an inner surface of the rod member (41) and an outer surface of the adjust rod (51) and the communication opening (R2) of the rod member (41), and
the driving mechanism is configured to change a positional relationship between the communication hole (42a) of the cap nut (42) and the insertion portion by moving the adjust rod (51) relative to the rod member (41).

5. A vehicle reinforcing member (100) according to claim 4, wherein
the insertion portion has a tapered shape.

6. A vehicle reinforcing member (100) according to claim 4 or 5, wherein
the movement path (41b) of the rod member (41) and the adjust rod (51) respectively have circular cross sections, and
the driving mechanism includes
a first screw thread (51 b) provided on an outer surface of the adjust rod (51),
a second screw thread (49) provided on an inner surface of the rod member (41) to engage with the first screw thread (51b), and
a rotating mechanism (52) that is configured to rotate the adjust rod (51) and is configured to move the adjust rod (51) in the movement path (41b) of the rod member (41).

7. A vehicle reinforcing member (100) according to claim 6, wherein
the rod member (41) is a cylindrical member extending in the axial direction, the adjust rod (51) has a projection end that is configured to project from another end of the piston rod (40), and
the rotating mechanism (52) is attached to the projection end of the adjust rod (51).

8. A vehicle reinforcing member (100) according to any one of claims 1 to 7, further comprising a biasing member (48) that is configured to bias the second piston (30) in one direction of the axial direction.

9. A vehicle reinforcing member (100) according to any one of claims 1 to 8, further comprising a first coupling portion (E2) that is configured to couple the piston rod (40) to one of the two positions on the vehicle body (3), wherein
the first coupling portion (E2) includes
an attachment portion (E2a) attached to a portion of an outer surface of the piston rod (40) outside of the cylinder (10), and
a first extending portion (E2b) that is offset from an extending line of an axial center of the piston rod (40) and is configured to extend in the axial direction.

10. A vehicle reinforcing member (100) according to any one of claims 1 to 9, further comprising a second coupling portion (E1) that is configured to couple the cylinder (10) to another position of the two positions on the vehicle body (3), wherein
the second coupling portion (E1) includes a second extending portion (E1a) that is configured to extend in the axial direction to be positioned on an extending line of the piston rod (40).

11. A vehicle (1) comprising:
a vehicle body (3); and
the vehicle reinforcing member (100) according to any one of claims 1 to 10 attached to a position between the two positions (20, 30) on the vehicle body (3).
